Europäisches Patentamt

European Patent Office

Office européen des brevets

(19)

(11) **EP 0 792 063 B1**

(12) **FASCICULE DE BREVET EUROPEEN**

(45) Date de publication et mention
de la délivrance du brevet:
**07.05.2003 Bulletin 2003/19**

(51) Int Cl.⁷: **H04N 3/15**

(21) Numéro de dépôt: **97400385.7**

(22) Date de dépôt: **21.02.1997**

(54) **Réseau de cellules photosensibles**

Feld aus photoempfindlichen Sensoren

Photosensitive array

(84) Etats contractants désignés:
**CH DE FR GB LI**

(30) Priorité: **23.02.1996 FR 9602268**

(43) Date de publication de la demande:
**27.08.1997 Bulletin 1997/35**

(73) Titulaire: **CSEM Centre Suisse d'Electronique et
de Microtechnique SA
Recherche et Développement
2007 Neuchâtel (CH)**

(72) Inventeurs:
• **Venier, Philippe
1792 Cordast (CH)**

• **Arreguit, Xavier
1052 Le Mont (CH)**

(74) Mandataire: **Caron, Gérard et al
Cabinet JP Colas
37 avenue Franklin D. Roosevelt
75008 Paris (FR)**

(56) Documents cités:
**EP-A- 0 706 143        FR-A- 2 726 143
US-A- 4 400 729        US-A- 5 130 563
US-A- 5 187 581**

• **IBM TECHNICAL DISCLOSURE BULLETIN, vol.
34, no. 7A, 1 Décembre 1991, pages 392-395,
XP000255643 "CCD IMAGING DEVICE WITH
CENTER-WEIGHTED AREA AVERAGING"**

## Description

La présente invention est relative à un réseau de cellules photosensibles dans lequel chaque cellule est destinée à fournir un signal de sortie représentant le contraste local présent dans la zone où se situe cette cellule dans le réseau. Plus particulièrement, l'invention concerne un capteur d'images formé d'un tel réseau de photorécepteurs pour convertir de la lumière reçue en un ensemble de signaux représentatifs de l'énergie photonique spatiale contenue dans cette lumière.

Un tel capteur d'images est du type qu'on peut désigner par analogie avec l'oeil biologique, par "rétine artificielle", dispositif photorécepteur qui est capable de transformer des paquets d'énergie photonique en des signaux "nerveux" électriques que l'on peut traiter ensuite sous quelque forme que ce soit, représentative de la lumière qui frappe ce dispositif photorécepteur.

Le dispositif photorécepteur doit comprendre des capteurs assurant la conversion photoélectrique de la lumière réfléchie par la scène soumise à la prise de vue. Ces capteurs permettent d'obtenir des signaux proportionnels à la luminance $L(x)$ des vecteurs $x$ de cette scène. La luminance $L(x)$ est proportionnelle à l'éclairement $E(x)$ de la scène et au coefficient de réflexion $\rho(x)$ des surfaces des objets qui constituent la scène. Pour un traitement perceptif, le paramètre important est le coefficient de réflexion, car il caractérise la surface des différents objets indépendamment du type d'éclairement.

Lorsque l'éclairement n'est pas constant pour toute la scène, le coefficient de réflexion ne peut pas se déduire simplement de la luminance. Il est nécessaire de faire une hypothèse sur le type d'éclairement $E(x)$. Dans les conditions réelles d'illumination, on peut admettre que l'éclairement est localement constant.

Dès lors, pour chaque point de la scène, en calculant le contraste local, c'est-à-dire le rapport de luminance $L(x)$ avec une valeur moyenne locale $L_{moy}(x)$ de la luminance, on obtient une grandeur directement proportionnelle au coefficient de réflexion $\rho(x)$.

Pour des images acquises avec des capteurs CCD ou CMOS, ce type de traitement peut être appliqué, mais il ne pourra être effectué correctement que si l'image contient bien toute la dynamique de la luminance de la scène examinée, à l'instar de ce qui se passe avec le traitement effectué au niveau de la rétine biologique.

Or, les conditions d'illumination ambiantes peuvent varier dans de très grandes proportions, typiquement de sept ordres de grandeur, si on considère par exemple d'une part la lumière d'une nuit sans lune, et d'autre part la lumière de plein soleil.

Il faut donc pour obtenir un traitement correct qu'aucune partie de l'image acquise ne soit ni sur-, ni sous-exposée. Pour des scènes réelles, les situations de sur- ou sous-exposition d'une partie de l'image sont très fréquentes et il n'est donc pas possible de retrouver à posteriori le coefficient de réflexion $\rho(x)$. De plus, calculée avec des moyens classiques, numériques ou séquentiels, ce traitement prend trop de temps pour permettre un traitement perceptif en temps réel.

Par US 5 130 563, on connaît un réseau de cellules photosensibles tel que défini dans le préambule de la revendication 1.

Dans ce cas, chaque cellule du réseau comprend un élément photosensible et une conductance verticale. Le signal de sortie de la cellule est prélevé sur cette conductance verticale après traitement dans un étage de changement de niveau. La conductance est mise en parallèle avec des conductances dont la valeur est commandée par les signaux de sortie respectifs des autres cellules du réseau.

L'invention a pour but de perfectionner le réseau de cellules photosensibles décrit dans le document précité pour permettre de calculer le coefficient de réflexion des surfaces de la scène observée, en évitant les problèmes de sur- et de sous-exposition liés au temps de calcul.

L'invention a donc pour objet un réseau de cellules photosensibles présentant les particularités définies dans la partie caractérisante de la revendication 1.

Grâce à ces caractéristiques, le calcul du coefficient de réflexion est effectué localement dans chaque cellule ou pixel de la rétine. Il devient ainsi possible d'avoir sur un même réseau ou rétine plusieurs zones travaillant chacune à des niveaux d'illumination différant de plusieurs ordres de grandeur. De plus, la détermination du coefficient de réflexion est effectuée instantanément et simultanément pour toutes les cellules du réseau, de sorte qu'un traitement en temps réel est possible.

En outre, tout en assurant une sensibilité satisfaisante du réseau au niveau de chaque cellule, il est également possible, grâce à l'invention d'obtenir dans le réseau de cellules un bon compromis entre la résolution spatio-temporelle et le rapport signal/bruit des signaux de sortie en particulier dans le domaine des faibles illuminations. En outre, le réseau de cellules selon l'invention permet de limiter le nombre de composants actifs de chaque cellule à une valeur minimale.

Le réseau suivant l'invention présente une grande capacité d'adaptation aux conditions d'éclairement de scènes réelles permettant d'extraire de la luminance incidente une information sur les surfaces des objets de la scène indépendamment du type d'éclairement.

En outre, le traitement effectué dans chaque cellule du réseau est en mode courant, chaque cellule fournissant à sa sortie une information formée par un courant. Une telle information peut être exploitée directement par conversion fréquence-courant.

Dans une thèse de doctorat publiée en juin 1994 par l'Institut Polytechnique de Grenoble, France et intitulé "Le traitement neuronal de l'information dans la rétine des vertébrés: un creuset d'idées pour la vision artificielle", W. Beaudot (Laboratoire de Traitement d'Images et de Reconnaissance de Formes de Grenoble, France) a analysé la fonction de transfert de la rétine des vertébrés. Il s'est avéré que la réponse d'un photorécepteur biologique présente la forme d'un faisceau de sigmoïdes dont chacun représente la compression pseudo-logarithmique de l'illumination pour un niveau particulier de celle-ci en suivant la loi de Michaelis-Menten.

Dans la suite de la description, on désignera par compression, conversion ou fonction de transfert sigmoïdale les fonctions de compression ou de transfert correspondant ou équivalent à ce dernier type.

L'auteur de la thèse propose également un modèle équivalent électrique permettant d'obtenir une telle réponse. Ce modèle équivalent prend donc en compte la loi de Michaelis-Menten contrôlée dynamiquement en permettant une adaptation de cette loi en fonction de caractéristiques statistiques de la lumière qu'il s'agit de transcoder en signaux exploitables. Ce transcodage revient en fait à ce que la sensibilité de chaque photorécepteur soit localement ajustée dans le réseau en fonction de l'intensité moyenne et de l'écart type de l'intensité lumineuse, localement estimées. Toutefois, l'ouvrage précité ne fait état d'aucune implémentation pratique du modèle électrique ainsi proposé.

D'autres particularités intéressantes de l'objet de l'invention sont définies dans les sous-revendications.

Ainsi, suivant un premier mode de réalisation de l'invention, ledit second circuit de calcul est agencé pour élaborer ledit courant de mesure de façon qu'il résulte d'une compression sigmoïdale dudit rapport entre le courant représentatif de l'illumination locale et ledit courant moyen.

Cependant, suivant un second mode de réalisation de l'invention, ledit second circuit de calcul est agencé pour élaborer ledit courant de mesure selon l'équation:

$$I_{out}(k,l) \cong I_0 \cdot \int_{k,l} f_R(k,l) \cdot \frac{I_{ph}(k,l)}{f_R(k,l)*I_{ph}(k,l)} \cong I_0 \cdot \int_{k,l} f_R(k,l) \cdot \frac{I_{ph}(k,l)}{I_{moy}(k,l)}$$

dans lequel:

$I_{out}$  courant de mesure;
k et l  indices en X et Y d'une cellule concernée dans le réseau bidimensionnel;
$I_o$  courant fourni par une source de courant prévue dans chaque cellule concernée;
$f_R$  kernel de convolution d'allure Gaussienne
$I_{ph}$  courant dans le photorécepteur
$I_{moy}$  courant moyen

On notera que, dans ce second mode de réalisation de l'invention, pour les valeurs du courant $I_{ph}$ proches du courant $I_{moy}$, le courant de mesure $I_{out}$ est proportionnel au rapport $I_{ph}/I_{moy}$, c'est-à-dire proportionnel au contraste local. Pour des valeurs du courant $I_{ph}$ respectivement très inférieures et très supérieures au courant $I_{moy}$, le courant de mesure $I_{out}$ tend vers 0 et vers $\int_k f_R(k,l)*I_0$, valeur qui est un multiple du courant $I_0$. Ce deuxième mode de réalisation permet donc d'obtenir également un courant de mesure d'allure croissante, monotone et saturante.

Par ailleurs, il convient de signaler qu'il est connu d'après le brevet US-A-4 400 729 concernant un réseau de cellules photosensibles du type de la présente invention, d'apporter une correction au signal de sortie de chaque cellule en utilisant l'information d'image des cellules voisines. A cet effet, les signaux engendrés par les éléments photosensibles sont soumis à un calcul de la valeur médiane des différences obtenues à partir des signaux fournis par quatre cellules adjacentes dans le réseau. Il s'agit donc d'un processus de calcul différent de celui appliqué dans le réseau selon la présente invention. En outre, le document antérieur ne fait pas état de la production d'un courant de mesure à fonction croissante, monotone et saturante.

D'autres caractéristiques et avantages de l'invention apparaîtront au cours de la description qui va suivre, donnée uniquement à titre d'exemple et faite en se référant aux dessins annexés sur lesquels:

- la figure 1 est un schéma symbolique illustrant le principe qui est à la base du fonctionnement du premier mode de réalisation de la présente invention;
- la figure 2 est un schéma plus élaboré illustrant ce même principe de base;
- la figure 3 est un schéma détaillé de quelques cellules d'un capteur d'images utilisant le réseau de cellules selon l'invention;

- la figure 4 est un graphe montrant le rapport des courants $I_{log}$ et $I_0$ circulant dans une cellule du capteur, en fonction du logarithme du rapport des courants $I_{ph}$ et $I_{moy}$, circulant également dans le capteur, la courbe étant comparée à une courbe analogue obtenue par le calcul théorique;
- la figure 5 est un graphe montrant le courant de sortie $I_{log}$ du circuit de compression sigmoïdale d'une cellule du capteur en fonction du courant $I_{ph}$ circulant dans l'élément photosensible de cette cellule, la courbe étant comparée à une courbe analogue obtenue par le calcul théorique;
- la figure 6 montre en a), b) et c) trois graphes illustrant le fonctionnement du filtre adaptatif utilisé dans chaque cellule du capteur d'images selon l'invention;
- la figure 7 est un schéma détaillé d'une variante du capteur d'images selon le premier mode de réalisation de l'invention.
- la figure 8 illustre schématiquement le principe qui est à la base du second mode de réalisation de l'invention;
- la figure 9 illustre de façon plus détaillée le principe de base représenté sur la figure 8; et
- la figure 10 est un schéma d'une cellule d'un capteur d'images à deux dimensions connecté selon un schéma hexagonal et utilisant le principe de base du second mode de réalisation de l'invention.

Le capteur d'images selon le premier mode de réalisation de l'invention (capteur qui est appelé aussi "rétine artificielle"), est conçu sur la base du modèle théorique élaboré par l'auteur de la thèse précitée à partir des investigations faites sur les rétines de certains vertébrés. Il met donc en oeuvre la loi de Michaelis-Menten afin de réaliser une compression sigmoïdale du signal d'intensité lumineuse dû à l'illumination du capteur et ainsi de permettre la prise en compte de la gamme complète de niveaux d'illumination (environ sept ordres de grandeur) que le capteur est généralement susceptible de recevoir. La compression sigmoïdale est réalisée dans des fenêtres d'intensité correspondant à la gamme de sensibilités du photorécepteur, l'adaptation à un niveau d'intensité donné étant déterminée en utilisant la valeur moyenne de l'intensité à laquelle au moins un groupe de photorécepteurs est confronté.

La loi de Michaelis- Menten peut s'exprimer ainsi:

$$R_{log} = K \; \frac{1}{1+\dfrac{N_0}{N}} \qquad\qquad (1)$$

dans laquelle $R_{log}$ est la réponse d'un photorécepteur, K est une constante, $N_0$ est le niveau moyen d'illumination sur un groupe de photorécepteurs du capteur et N le niveau d'illumination du photorécepteur considéré dans ce groupe.

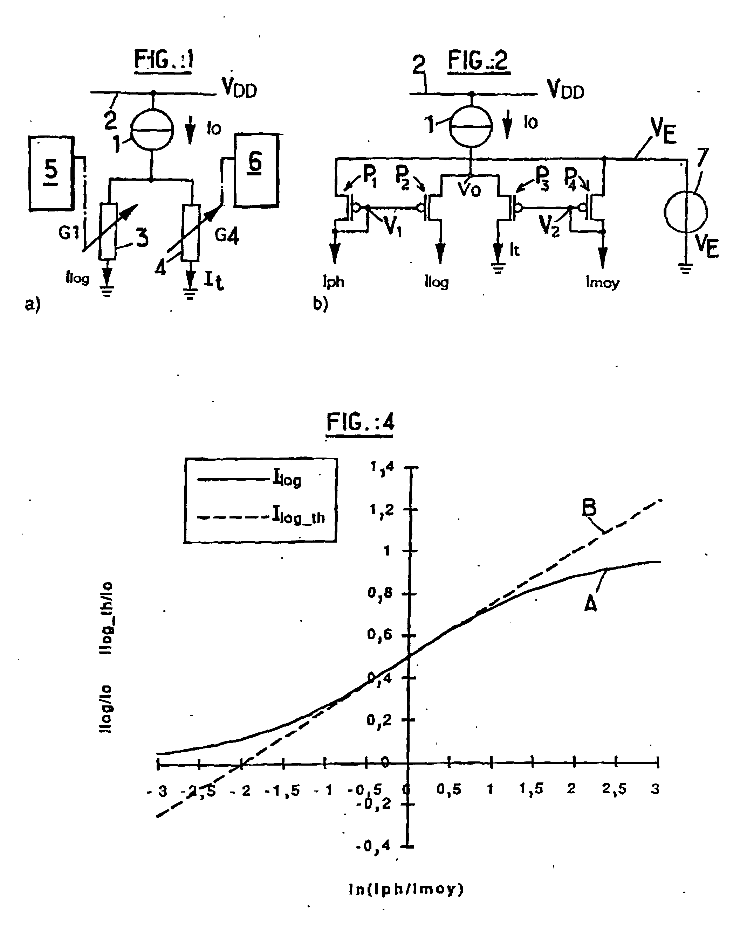

La figure 1 représente le principe d'un circuit selon le premier mode de réalisation de l'invention permettant de mettre en oeuvre la loi précitée. Ce circuit que l'on appellera "circuit de compression sigmoïdale adaptatif", se présente sous la forme d'un diviseur de courant et comporte une source de courant 1 connectée à une source de tension d'alimentation $V_{DD}$ 2 et débitant un courant constant $I_0$.

La source de courant 1 est connectée à deux conductances ajustables 3 et 4, l'une en fonction d'un courant $I_{ph}$ produit par au moins un photorécepteur 5 et l'autre par un circuit de calcul 6 qui détermine un courant $I_{moy}$. Celui-ci est la "moyenne" des courants produits par un groupe de photodétecteurs dont le photodétecteur considéré fait partie. Ce courant $I_{moy}$ est représentatif du niveau moyen d'illumination (le terme "moyenne" n'étant donc pas à prendre dans le sens mathématique strict). Les conductances 3 et 4 sont parcourues par des courants appelés respectivement $I_{log}$ et $I_t$.

Le courant $I_{log}$ présente la forme:

$$I_{log} = \frac{G_1 I_0}{G_1 + G_2} \qquad\qquad (2)$$

dans laquelle $G_1$ et $G_2$ sont respectivement les valeurs des conductances 3 et 4. Avec $G_1 = kI_{ph}$ et $G_2 = kI_{moy}$ on obtient:

$$I_{log} = \frac{I_0}{1+\dfrac{I_{moy}}{I_{ph}}} \qquad\qquad (3)$$

équation qui correspond à la loi de Michaelis-Menten énoncée ci-dessus.

Le circuit que l'on vient de décrire peut être réalisé moyennant l'emploi de divers types de technologies des semiconducteurs. Dans ce qui va suivre, on décrira, à titre d'exemple, une réalisation à l'aide de transistors MOS. La figure 2 montre l'implémentation du circuit de base à l'aide de ces transistors travaillant en faible inversion, c'est à dire dans la partie de leur courbe caractéristique présentant une allure exponentielle.

Plus précisément, le circuit de compression adaptatif selon l'invention comprend quatre transistors P1, P2, P3 et P4 de type P. Le transistor P2 forme la conductance 3, tandis que le transistor P3 forme la conductance 4. Le trajet source-drain du transistor P1 est parcouru par le courant $I_{ph}$ et sa grille est raccordée à son drain. La source est reliée à l'une des bornes d'une source de tension 7 fournissant la tension $V_E$.

La grille du transistor P1 est reliée à celle du transistor P2 dans lequel circule le courant commandé $I_{log}$. Sa source est reliée à la source de courant 1 fournissant le courant $I_0$. Ainsi, la conductance formée par le transistor P2 est régulée par le transistor P1.

Le transistor P3 est également relié à la source de courant 1 et sa grille est reliée à celle du transiter P4 dont la source est au potentiel $V_E$ de la source de tension 7. Le trajet source-drain du transistor P4 est parcouru par le courant $I_{moy}$ et sa grille est connectée à son drain. Par conséquent, le transistor P4 régule la conductance formée par le transistor P3.

Pour ce qui concerne les transistors P1 à P4 connectés. comme indiqué sur la figure 2, on peut écrire les équations suivantes:

$$I_{ph} = I_{D0}e^{\frac{V_1 - nV_g}{nU_T}} \qquad (4)$$

$$I_{log} = I_{D0}e^{\frac{V_1 - nV_0}{nU_T}} \qquad (5)$$

$$I_t = I_{D0}e^{\frac{V_2 - nV_0}{nU_T}} \qquad (6)$$

$$I_{moy} = I_{D0}e^{\frac{V_2 - nV_E}{nU_T}} \qquad (7)$$

dans lesquelles $I_{D0}$ est le courant spécifique de chaque transistor, $V_0$, $V_1$, $V_2$ sont les potentiels respectifs indiqués sur la figure 2, n étant le facteur de pente et $U_T$ le potentiel thermique de chaque transistor.

Par ailleurs:

$$I_{log} + I_t = I_0 \qquad (8)$$

En combinant les équations (4) à (8) ci-dessus, il vient:

$$I_{log} = \frac{I_{ph}I_0}{I_{ph} + I_{moy}} = \frac{I_0}{1 + \frac{I_{moy}}{I_{ph}}} \qquad (9)$$

ce qui correspond à l'équation (3) recherchée.

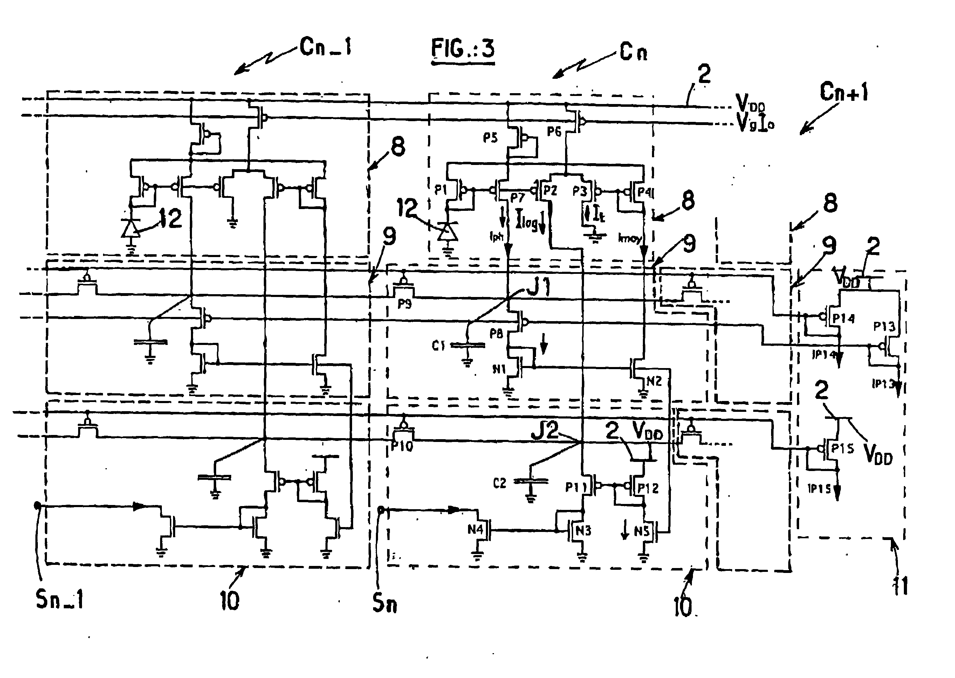

La figure 3 représente plus en détail comment est organisé un capteur d'images selon le premier mode de réalisation de l'invention. Le capteur comporte un grand nombre de cellules connectées les unes aux autres selon une configuration donnée qui peut être linéaire (comme représenté), hexagonale ou autre. Sur la figure 3, on a représenté schématiquement trois cellules seulement de ce réseau, à savoir les cellules $C_n$, $C_{n-1}$ et $C_{n+1}$. Toutes les cellules étant identiques, seules les cellules $C_{n-1}$ et $C_n$ sont représentées en détail.

On voit que. la cellule $C_n$ comprend trois blocs fonctionnels, à savoir le circuit de compression sigmoïdale adaptatif 8, déjà décrit partiellement à propos de la figure 2, un circuit de calcul de moyenne 9 et un filtre passe-bas adaptatif 10 qui comprend notamment une sortie $S_n$ sur laquelle apparaît un signal utile représentatif du contraste dans la zone de la cellule $C_n$.

En outre, le capteur d'image comprend un circuit de polarisation 11 qui est commun à toutes les cellules dont il est composé.

Sur la figure 3, on reconnaît les transistors P1 à P4 que l'on a déjà examinés à propos de la figure 2. Le trajet source-drain du transistor P1 est relié en série avec une photodiode 12 délivrant le courant $I_{ph}$ en fonction de l'illumination à laquelle cette cellule est localement exposée. La source de tension 7 fournissant le potentiel $V_E$ est formée par un transistor P5 dont la source est connectée à la source de tension $V_{DD}$ et dont le drain est relié aux sources des transistors P1 et P4.

La source de courant 1 délivrant le courant $I_0$ est formée par un transistor P6. La grille de ce dernier est soumise à un potentiel $V_{gl0}$, tandis que son trajet source-drain est relié entre la source de tension 2 et les sources des transistors P2 et P3.

Un transistor P7 est monté en miroir de courant avec le transistor P1 et délivre donc un courant $I_{ph}$ qui est l'image du courant circulant dans la photodiode 12.

Le circuit de calcul 9 forme avec ses homologues dans les autres cellules un réseau diffusant (ici latéralement) composé d'une conductance dite "verticale" formée par un transistor P8 et d'une conductance dite "latérale" formée par un transistor P9. Le noeud J1 entre les trajets drain-source des transistors F8 et P9 est connecté au drain du transistor P7 et c'est à travers ce noeud que le courant $I_{ph}$ de la cellule considérée est réparti, latéralement vers les cellules voisines à travers les transistors P9, et verticalement à travers le transistor P8 de la cellule considérée.

Le trajet source-drain du transistor P8 est connecté en série avec celui d'un transistor N1 raccordé la masse et formant avec un autre transistor N2 un miroir de courant.

Le transistor P8 est parcouru par un courant qui est représentatif de l'illumination moyenne frappant le capteur d'images au moins dans la zone proche de la cellule Cn considérée. Connue le transistor N2 est monté en miroir de courant, il est parcouru par un courant $I_{moy}$ représentatif de cette illumination moyenne. Comme par ailleurs les trajets source-drain des transistors P4 et N2 sont mis en série, le transistor P4 est traversé par ce même courant $I_{moy}$.

Il est à noter que le transistor N1, outre de permettre de répliquer le courant $I_{moy}$ dans le transistor N2, est également à même de fixer le potentiel auquel travaille le diviseur de courant formé par les transistors P8 et P9.

La longueur de diffusion (autrement dit le nombre de cellules sur lesquelles sera ressenti le courant $I_{ph}$ de la cellule considérée) est déterminée par le rapport des conductances des transistors P8 et P9 selon la formule:

$$L = \sqrt{\frac{G_{P9}}{G_{P8}}} \qquad (10)$$

dans laquelle L est la longueur de diffusion et $G_{P8}$ et $G_{P9}$ sont respectivement les conductances des transistors P8 et P9. Le rapport en question est fixé par le circuit de polarisation 11 commun à l'ensemble des cellules.

Ce circuit de polarisation comprend deux transistors P13 et P14 fixant respectivement la polarisation des transistors P8 et P9 des cellules. Ainsi, la longueur de diffusion peut s'écrire comme un rapport de courants comme suit:

$$L = \sqrt{\frac{I_{P14}}{I_{P13}}} \qquad (11)$$

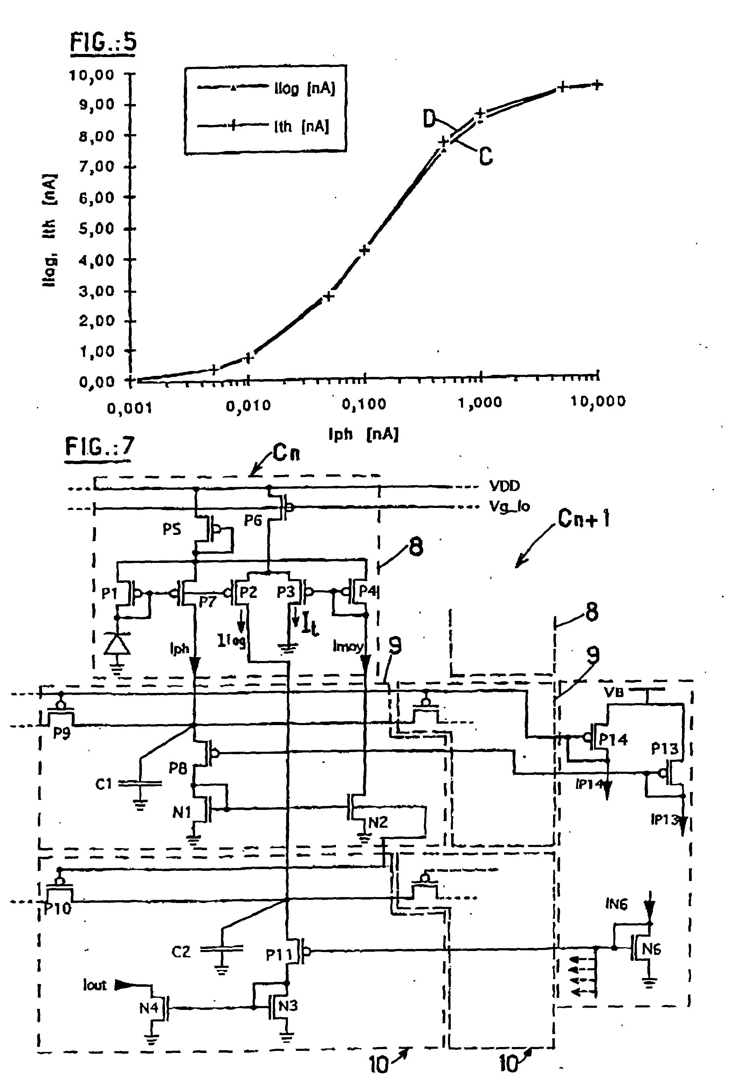

La figure 4 montre un graphe du rapport $I_{log}/I_0$, resp. $I_{log\text{-}th}/I_0$ en fonction de la valeur $\ln(I_{ph}/I_{moy})$, la courbe A montrant l'allure relevée sur le circuit de la figure 3 et la courbe B celle calculée à partir de la théorie. On voit que la compression sigmoïdale opérée par le circuit selon l'invention suit une grande partie de la courbe théorique et qu'elle s'étend sur un peu plus de deux ordres de grandeur.

La figure 5 est un graphe montrant l'allure du courant $I_{log}$ (courbe C), respectivement $I_{log\text{-}th}$ (courbe D) en nanoampères (nA) en fonction du courant $I_{ph}$ également en nA. La courbe C a été relevée sur la cellule centrale d'un capteur d'images selon l'invention composé de 50 cellules conforme au schéma de la figure 3, la cellule centrale recevant une intensité lumineuse variable, tandis que les autres cellules ont été illuminées avec un éclairage constant et uniforme. On voit ici que le cas expérimental suit de très près le cas théorique établi par le calcul selon la loi de Michaelis-Menten. La longueur de diffusion L a été choisie à $10l_{log\text{-}th}$.

On va maintenant décrire le filtre passe-bas adaptatif désigné par la référence 10 sur la figure 3 et présent dans chaque cellule du capteur d'images selon le présent mode de réalisation de l'invention. Ce filtre est destiné à améliorer le rapport signal/bruit pour les faibles intensités lumineuses auxquelles les cellules du capteur peuvent être exposées.

Connue les circuits de calcul de moyenne des cellules, le filtre passe-bas 10 forme avec ses homologues dans les autres cellules un réseau diffusant. Ainsi, chaque filtre 10 comprend un transistor "latéral" P10 et un transistor "vertical" P11 qui sont connectés l'un à l'autre au niveau d'un noeud J2 auquel est envoyé le courant $I_{log}$ généré dans le circuit de compression sigmoïdale 8 de la cellule. Le transistor P11 est raccordé en série avec un transistor N3 formant avec un transistor N4 un miroir de courant permettant de générer le courant de sortie $I_{out}$ de la cellule, ce courant de sortie passant dans la borne de sortie $S_n$ de la cellule. Le noeud J2 est raccordé au transistor P10 de la cellule voisine (ici la cellule Cn+1). Un condensateur C2 est branché entre le noeud J2 et la masse.

Le transistor P11 constitue une conductance réglable qui est polarisée par le courant $I_{moy}$ calculé dans le circuit de calcul 9 de la cellule par l'intermédiaire de deux autres transistors en série P12 et N5.

La polarisation des transistors latéraux P10 des filtres de toutes les cellules est assurée par un transistor P15 dont la grille est raccordée aux grilles de toutes ces transistors latéraux et qui fait partie du circuit de polarisation commun 11.

On voit ainsi que le filtre passe-bas adaptatif 10 est régulé par le courant $I_{moy}$ qui comme on l'a déjà vu, correspond à une moyenne spatio-temporelle d'illumination au niveau d'un nombre prédéterminé de cellules voisines. Comme le courant $I_{moy}$ varie peu d'une cellule à l'autre, on peut définir à propos d'un groupe prédéterminé de cellules une constante d'espace δ:

$$\delta = L_F^2 = \frac{G_{P10}}{G_{P11}} = \frac{I_{P15}}{I_{moy}} \qquad (12)$$

dans laquelle $L_F$ est la longueur de diffusion du réseau diffusant formé par les filtres 10, $G_{P10}$ et $G_{P15}$ les conductances matérialisées par les transistors respectifs P10 et P15 et $I_{P15}$ le courant circulant dans le transistor P15 du circuit de polarisation 11.

On voit d'après l'expression (13) que la constante d'espace δ est inversement proportionnelle au niveau moyen d'illumination.

La constante de temps τ du filtre 10 peut être définie comme suit:

$$\tau = \frac{C_2}{n g_{mP11}} = \frac{C_2 U_T}{I_{P11}} \qquad (13)$$

dans laquelle n, $g_m$ et $U_T$ sont des paramètres caractéristiques du transistor P11.

On voit que la constante de temps τ dépend également de façon inversement proportionnelle du niveau moyen d'illumination.

En d'autres termes, tant spatialement que temporellement, le filtre adaptatif 10 dans chaque cellule permet d'améliorer le rapport signal/bruit pour les faibles intensités d'illumination, au détriment, il est vrai des résolutions spatiale et temporelle du capteur d'images.

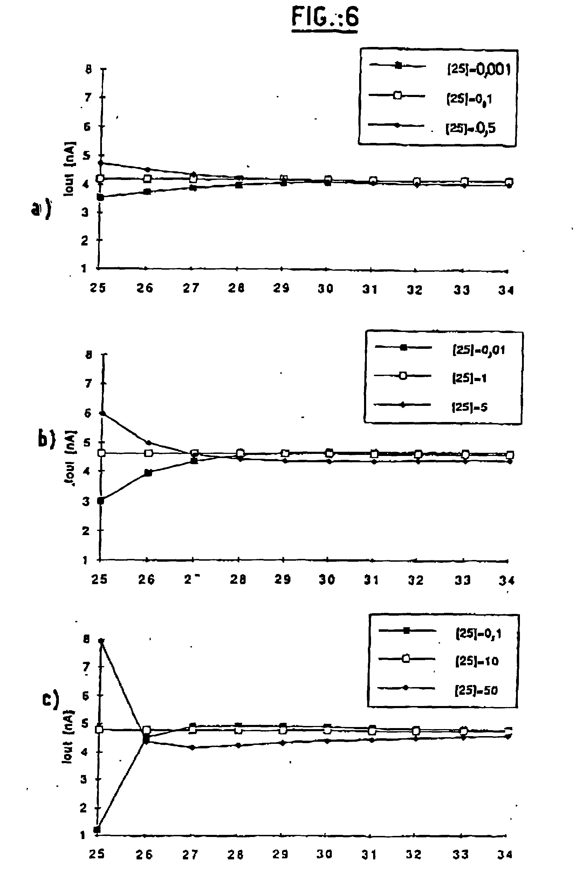

La figure 6 illustre l'influence du filtre adaptatif 10 sur le résultat de la mesure effectuée par le capteur d'images que l'on vient de décrire. Les trois graphes visibles en a), b) et c) portent sur les cellules n° 25 à 34 d'un réseau unidimensionnel de 50 cellules agencées comme sur la figure 3, la cellule centrale 25 étant éclairée de façon variable et les autres cellules recevant une illumination uniforme. Les graphes représentent le courant de sortie $I_{out}$ pour chacune des cellules concernées n° 25 à 34 et correspondent respectivement à un courant moyen d'illumination $I_{moy}$ = 100pA, $I_{moy}$ = 1nA et $I_{moy}$ = 10nA. Chaque graphe représente trois courbes relevées respectivement pour une illumination de la cellule centrale n° 25 telle que le rapport $I_{ph}/I_{moy}$ est respectivement de 100, de 1 et de 5.

On voit que plus le courant $I_{moy}$ est faible, plus le retour au niveau moyen est lent et plus la longueur de diffusion $L_F$ est élevée. Une évolution dans ce sens des diverses grandeurs va de pair avec une amélioration du rapport signal/bruit du signal de sortie.

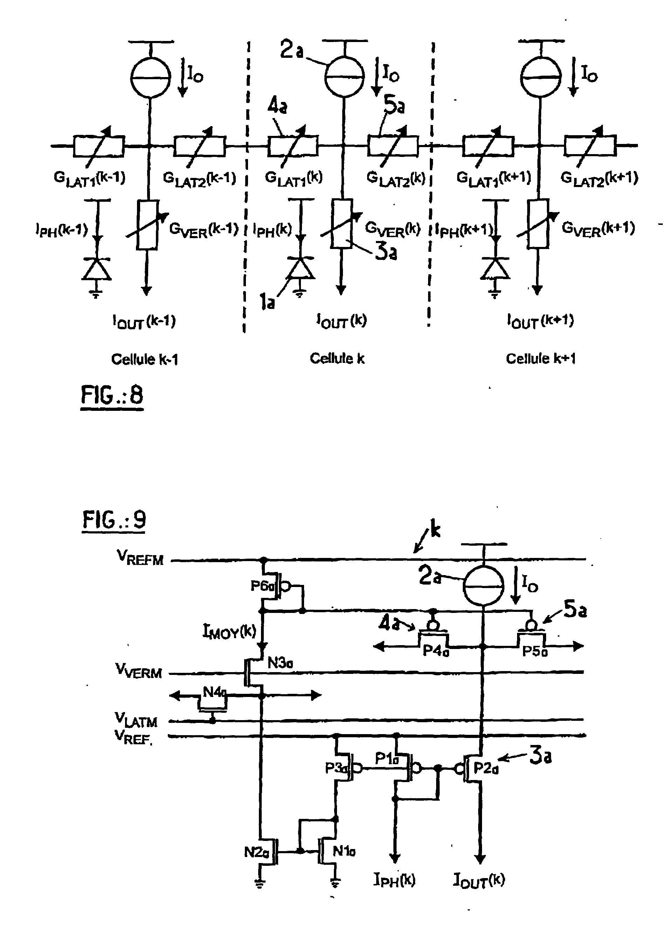

La figure 7 représente une variante du premier mode de réalisation du capteur d'images selon l'invention. Il diffère de celui précédemment décrit par la façon dont est polarisé le filtre passe-bas adaptatif 10. En effet, alors que sur la figure 3, on voit que la branche "verticale" (transistors P11 et N3) est polarisée par le courant $I_{moy}$ via les transistors P12 et N5, dans le mode de réalisation de la figure 7, c'est la branche "latérale" qui est polarisée par ce paramètre par l'intermédiaire du transistor N2 dont la grille est reliée à la grille du transistor P10 dans la même cellule. Par ailleurs, le circuit de polarisation comporte, au lieu du transistor P15, un transistor N6 qui polarise à une valeur identique pour toutes les cellules le transistor P11 du filtre adaptatif.

Une autre variante de ce premier mode de réalisation consiste à utiliser pour les transistors P1 à P4 et P7 du circuit de compression sigmoïdale 8 des transistors du type MOS CLTB (Compatible Lateral Bipolar Transistor ou transistor bipolaire à compatibilité latérale) éventuellement associés à des transistors MOS en cascade, selon des montages qui ont été décrit dans deux ouvrages , l'un de X. Arreguit dans la thèse n° 817, 1989 à l'Ecole Polytechnique Fédérale de Lausanne (Suisse), et l'autre de E. Vittoz dans IEEE, Journal of Solid State Circuits, Vol. SC-18, N°3, juin 1983 et intitulé "MOS Transistors Operated in the Lateral Bipolar Mode and their Application in CMOS Technology".

Sur le plan fonctionnel, les circuits des figures 3 et 7 sont équivalents.

Les modes de réalisation décrits et représentés sur les figures 3 et 7 sont dits unidimensionnels en ce sens que le réseau s'étend dans une seule direction. Toutefois, à l'image des réseaux neuronaux pseudo-biologiques connus dans ce domaine, l'invention englobe également les réseaux dits multidimensionnels (supérieurs à une dimension). Par exemple, dans un réseau tridimensionnel, les noeuds $J_1$ et $J_2$ pourraient être connectés à des noeuds équivalents situés dans les cellules de réseaux matérialisés dans des "plans" situés au-dessus et/ou en dessous de l'un ou l'autre des réseaux représentés sur les figures 3 et 7.

On va maintenant décrire un second mode de réalisation de l'invention en se référant plus particulièrement aux figures 8 à 10. On notera que cette solution permet d'obtenir des résultats tout à fait semblables à ceux que le circuit des précédentes figures permet d'atteindre. Toutefois, la seconde solution présente un avantage supplémentaire en ce sens que la réalisation pratique est moins sujette aux défauts d'appariement des composants utilisés.

Pour faciliter la compréhension de ce qui va suivre, toutes les références littérales ou numériques portent un suffixe "a" afin de pouvoir distinguer les composants correspondants de ceux utilisés dans le précédent mode de réalisation.

La figure 8 représente le principe qui est à la base de ce second mode de réalisation de l'invention. Le circuit représenté permet d'élaborer le courant de mesure selon l'équation:

$$I_{out}(k,l) \cong I_0 \cdot \int_{k,l} f_R(k,l) \cdot \frac{I_{ph}(k,l)}{f_R(k,l) * I_{ph}(k,l)} \cong I_0 \cdot \int_{k,l} f_R(k,l) \cdot \frac{I_{ph}(k,l)}{I_{moy}(k,l)} \qquad (14)$$

dans lequel:

$I_{out}$    courant de mesure;
k et l    indices en X et Y d'une cellule concernée dans le réseau bidimensionnel;
$I_0$    courant fourni par une source de courant prévue dans chaque cellule concernée;
$f_R$    kernel de convolution d'allure Gaussienne
$I_{ph}$    courant dans le photorécepteur
$I_{moy}$    courant moyen

La figure 8 montre le schéma très simplifié de trois cellules ou pixels k-1, k et k+1 d'un réseau photosensible ou rétine disposés ici sous forme de réseau unidimensionnel. Chaque cellule comprend un élément photosensible la telle qu'une photodiode par exemple fournissant le courant $I_{ph}(k)$ ainsi qu'une source de courant constant 2a fournissant le courant $I_0$ pour cette cellule ou pixel.

Chaque cellule matérialise une conductance verticale 3a ou $G_{VER}(k)$ à travers laquelle passe le courant de mesure calculé $I_{out}(k)$ constituant le signal de sortie du pixel. Le noeud de jonction entre la source de courant 2a et la conductance verticale 3a est relié à deux conductances latérale 4a et 5a ou GLAT1(k) et GLAT2(k) connectées respectivement aux conductances latérales des cellules gauche et droite voisines. Le principe de fonctionnement consiste à modifier les conductances 3a, 4a et 5a en fonction de l'image globale projetée sur le réseau.

Le courant $I_{ph}(k)$ est proportionnel à la luminance incidente L(k) qui nodule de manière proportionnelle la valeur de la conductance verticale 3a. De plus, le réseau comporte des moyens (non représentés sur la figure 8, mais décrits ultérieurement) permettant d'établir une moyenne spatiale des courant $I_{ph}$ des cellules voisines pour le courant moyen $I_{moy}(k)$ permettant de moduler les conductances latérales 4a et 5a dans chaque cellule k.

Il s'avère que cette conception du réseau permet d'obtenir un courant de mesure $I_{out}(k)$ pour chaque pixel proportionnel au rapport de la luminance L(k) et d'une valeur moyenne locale de la luminance, de sorte que le réseau devient apte à fournir un signal de sortie global satisfaisant, même si les niveaux de luminance frappant les différents zones du réseau différent de plusieurs ordres de grandeur.

Sur la figure 9, on a représenté un exemple d'implémentation du deuxième mode de réalisation de l'invention.

La conductance verticale est réalisée par un transistor P2a monté en faible inversion, son potentiel de grille étant commandé par le transistor P1a qui est traversé par le courant provenant de l'élément photosensible (non représenté sur la figure 9).

Les conductances latérales 4a et 5a sont respectivement matérialisées par les transistors P4a et P5a montés également en faible inversion , le potentiel de grille étant commandé par un transistor P6a qui est traversé par le courant $I_{moy}$. Le courant moyen $I_{moy}$ est obtenu par l'intermédiaire des transistors N1a et N2a montés en miroir de courant et du transistor N4a qui est relié par son trajet drain-source aux transistors correspondants des cellules voisines.

En faisant des hypothèses simplificatrices sur la distribution des courants $I_{ph}(k)$, on peut démontrer que la taille de la zone sur laquelle la normalisation du signal utile a lieu, est indépendante du niveau absolu de la luminance et est fixée par la constante d'espace C suivante:

$$C = \sqrt{\frac{Glat}{Gver}} = cste(V_{REFM}) \qquad (15)$$

Comme déjà indiqué ci-dessus, une difficulté que l'on peut rencontrer lors de la réalisation du réseau selon l'invention, consiste en le risque que certains paires de transistors ne soient que médiocrement appariés, ce qui peut donner lieu à des erreurs dans la détermination de certaines grandeurs calculées dans chaque cellule.

Le circuit de la figure 9 est moins sensible à ce défaut que les montages décrits à propos du premier mode de réalisation de l'invention, en ce qui concerne la source de courant 2a et l'utilisation du courent $I_{moy}$. En effet, le courant $I_0$ étant injecté à chaque cellule, il diffuse néanmoins latéralement dans le réseau en partie de sorte que toute différence entre les courants injectés dans les pixels voisins sera spatialement filtrée. Quant au courant $I_{moy}$, il sert uniquement à polariser les conductances latérales 4a et 5a dont l'effet ne se fait pas seulement sentir dans la cellule individuelle considérée, mais également latéralement, puisqu'elles déterminent la constante d'espace de normalisation.

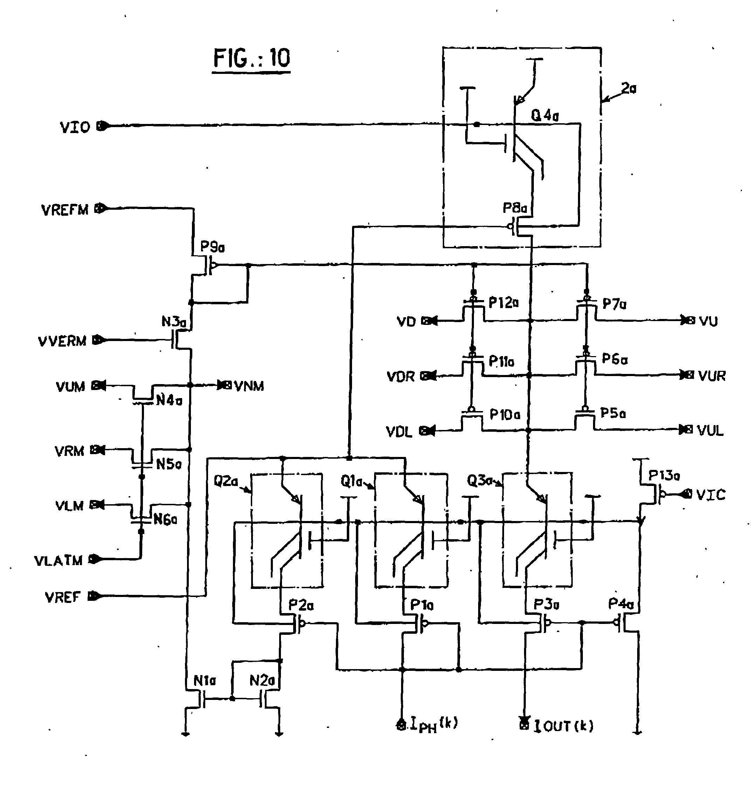

La figure 10 représente une variante de la cellule de la figure 9, dans laquelle on élimine encore davantage le défaut d'appariement des transistors grâce à l'utilisation de transistors CLTB, ces transistors présentant un appariement meilleur d'au moins un ordre de grandeur à celui des transistors MOS. En outre, à titre d'illustration, dans ce cas, la cellule est destinée à être utilisée dans un réseau de type hexagonal, ce qui signifie qu'elle communique avec six cellules voisines en même temps. Un transistor CLTB Q4 est prévu dans la source de courant 2a, un transistor MOS auxiliaire P8a étant connecté à sa borne de collecteur.

De même, chaque transistor P1a, P2a et P3a est ici associé à un transistor respectif CTLB Q1, Q2 et Q3, le collecteur de ce dernier étant relié au transistor MOS concerné. Les connexions latérales sont réalisées par les transistors respectifs N4a, N5a, N6a, P5a, P6a, P7a, P10a, P11a et P12a.

On notera que le second mode de réalisation peut être équipé d'un filtre adaptatif tel que décrit ci-dessus dans le cadre du premier mode de réalisation.

**Revendications**

**1.** Réseau de cellules photosensibles ($C_n$/ $C_{n+1}$, $C_{n-1}$) dont chaque cellule est destinée à fournir un signal de sortie ($S_n$) représentatif de l'illumination, présente dans la zone où se situe cette cellule dans le réseau, chaque cellule comprenant

- un élément photosensible (12) destiné à engendrer un signal ($I_{ph}$) représentatif de l'illumination locale dans ladite zone; et
- des moyens générateurs (8, 9) pour engendrer ledit signal de sortie ($S_n$) à partir dudit signal représentatif d'illumination locale de la cellule considérée et de parts prédéterminées de signaux représentatifs de l'illumination locale engendrés dans au moins certaines des cellules du réseau, voisines de ladite cellule considérée,

lesdits moyens générateurs (8, 9) comprenant une conductance verticale (P8, N1) parcourue par le courant ($I_{ph}$) représentatif du courant circulant dans ledit élément photosensible (12)
ce réseau étant **caractérisé en ce que**
dans chaque cellule, lesdits moyens générateurs (8, 9) comprennent également ;

- des moyens (8) pour établir un courant moyen ($I_{moy}$) formant une moyenne spatiale des signaux ($I_{ph}$) représentatifs de l'illumination locale desdites au moins certaines cellules voisines,

**en ce que**

- lesdits moyens générateurs (8, 9) comprennent également au moins une conductance latérale (P9) connectée en série avec toutes les conductances latérales des moyens générateurs (8, 9) de toutes les autres cellules, et

**en ce que**

- ledit courant moyen ($I_{moy}$) est prélevé sur ladite conductance verticale (P8, N1).

2. Réseau de cellules photosensibles selon la revendication 1, **caractérisé en ce que** lesdits moyens (8) pour établir un courant moyen ($I_{moy}$) sont agencés pour élaborer un courant de mesure ($I_{log}$) résultant d'une compression sigmoïdale dudit rapport entre le courant ($I_{ph}$) représentatif de l'illumination locale et ledit courant moyen ($I_{moy}$).

3. Réseau de cellules photosensibles selon la revendication 2, **caractérisé en ce que** lesdits moyens (8) pour établir un courant moyen ($I_{moy}$) comprennent un diviseur de courant comportant une source de courant constant (1) débitant dans des première et seconde conductances réglables (P1, P2; P3, P4) ayant une fonction de transfert sigmoïdale, la première (P1, P2) desdites conductances étant régulée par le courant ($I_{ph}$) circulant dans ledit élément photosensible (12) et **en ce que** la seconde desdites conductances (P3, P4) est régulée par ledit courant moyen ($I_{moy}$).

4. Réseau de cellules photosensibles suivant la revendication 3, **caractérisé en ce que** lesdites première et seconde conductances comprennent chacune un transistor (P2, P3) à l'électrode de commande duquel sont appliqués respectivement un signal représentatif du courant ($I_{ph}$) circulant dans ledit élément photosensible (12) et un signal représentatif dudit courant moyen ($I_{moy}$).

5. Réseau de cellules photosensibles suivant la revendication 4, **caractérisé en ce qu'**un transistor de commande (P1, P4) est associé respectivement à chacun des transistors (P2, P3) faisant partie desdites conductances, ces transistors de commande (P1, P4) étant respectivement parcourus par le courant ($I_{ph}$) circulant dans ledit élément photosensible (12) et par ledit courant moyen ($I_{moy}$) et leurs électrodes de commande étant connectées respectivement aux électrodes de commande desdits transistors faisant partie des conductances (P2, P3).

6. Réseau de cellules photosensibles suivant la revendication 1, **caractérisé en ce que** lesdits moyens générateurs (8, 9) sont agencés pour élaborer un courant de mesure ($I_{out}$) selon l'équation:

$$I_{out}(k,l) \cong I_0 \cdot \int_{k,l} f_R(k,l) \cdot \frac{I_{ph}(k,l)}{\overline{f_R(k,l) * I_{ph}(k,l)}} \cong I_0 \cdot \int_{k,l} f_R(k,l) \cdot \frac{I_{ph}(k,l)}{I_{moy}(k,l)}$$

dans lequel:

$I_{out}$     courant de mesure;
k et l     indices en X et Y d'une cellule concernée dans le réseau bidimensionnel;
$I_0$     courant fourni par une source de courant prévue dans chaque cellule concernée;
$f_R$     kernel de convolution d'allure Gaussienne
$I_{ph}$     courant dans le photorécepteur
$I_{moy}$     courant moyen

7. Réseau de cellules suivant la revendication 6, **caractérisée en ce que** chaque cellule (k-1, k, k+1) comprend une source de courant constant (2a), une conductance verticale (3a) connectée à cette source et traversée par ledit courant de mesure ($I_{out}(k)$) la valeur de ladite conductance verticale étant rendue proportionnelle à la luminance incidente détectée par ledit élément photosensible (1a), le noeud entre ladite source et ladite conductance verticale étant connectée à au moins deux conductances latérales (4a, 5a) dont la valeur est modulée par ledit courant moyen ($I_{moy}(k)$).

8. Réseau de cellules suivant la revendication 7, **caractérisé en ce que**, dans chaque cellule, ladite conductance verticale est formée par au moins un premier transistor (P2a) en faible inversion dont l'électrode de commande est commandée par au moins un second transistor (P1a) traversé par le courant ($I_{ph}(k)$) engendré par ledit élément photosensible (1a), tandis que lesdits conductances latérales (4a et 5a) sont formées par des quatrième et cinquième transistors (P4a, P5a) en faible inversion dont l'électrode de commande est commandée par un sixième transistor (P6a) traversé par ledit courant moyen ($I_{moy}(k)$) et dont les trajets principaux sont raccordés aux transistors homologues respectifs situés dans les cellules voisines (k-1, k+1).

9. Réseau de cellules photosensibles suivant les revendications 4, 5, et 8, **caractérisé en ce que** lesdits transistors comprennent des transistors MOS.

**10.** Réseau de cellules photosensibles suivant les revendications 4, 5 8 et 9, **caractérisé en ce que** lesdits transistors comprennent des transistors bipolaires

**11.** Réseau de cellules photosensibles suivant les revendications 4, 5 et 8 à 10, **caractérisé en ce que** lesdits transistors comprennent des transistors MOS CLBT.

**12.** Réseau de cellules photosensibles suivant l'une quelconque des revendications précédentes, **caractérisé en ce qu'**il comprend également un circuit de polarisation (11) commun à toutes les cellules ($C_n$/ $C_{n-1}$, $C_{n+1}$), et **en ce que** lesdites conductances verticale et latérale comportent des transistors (P8, P9) dont les électrodes de commande sont polarisées par ledit circuit de polarisation commun (11).

**13.** Réseau de cellules photosensibles suivant l'une quelconque des revendications 1 à 12, **caractérisé en ce que** chaque cellule comprend également un filtre passe-bas adaptatif (10) faisant partie desdits moyens pour élaborer ledit signal de sortie ($S_n$), pour améliorer le rapport signal/bruit dans le domaine de faible illumination de chaque cellule.

**14.** Réseau de cellules photosensibles suivant la revendication 13, **caractérisé en ce que** les filtres passe-bas (10) de toutes les cellules forment un réseau diffusant, chaque filtre comprenant une branche verticale (P11, N3) parcourue par ledit courant de mesure ($I_{log}$, $I_{out}$) et formée par une conductance variable en fonction dudit courant moyen ($I_{moy}$), et une branche latérale (P10) connectée en série avec les branches latérales des filtres (10) de toutes les autres cellules, et **en ce que** ledit signal de sortie ($S_n$) est prélevé sur la branche verticale (P11, N3) de ce filtre.

**15.** Réseau de cellules photosensibles suivant la revendication 14, **caractérisé en ce que** les branches latérale et verticale dudit filtre (10) comprennent chacune au moins un transistor (P10, P11, N3) et **en ce que** les transistors (P10) des branches latérales sont polarisés par un circuit de polarisation commun (11), tandis que l'un des transistors (P11) de la branche verticale est commandé par un signal qui est fonction dudit courant moyen ($I_{moy}$).

**16.** Réseau de cellules photosensibles suivant la revendication 14, **caractérisé en ce que** les branches latérale et verticale dudit filtre (10) comprennent chacune un transistor (P10, P11, N3) et **en ce que** le transistor de la branche latérale est commandé par le courant moyen ($I_{moy}$) établi dans la cellule correspondante, tandis que les transistors de toutes les branches verticales des cellules sont polarisées par un circuit de polarisation commun (11).

**Patentansprüche**

**1.** Netz aus photoempfindlichen Zellen ($C_n$, $C_{n+1}$, $C_{n-1}$), die jeweils dazu dienen, ein Ausgangssignal (Sn) zu liefern, welches die Beleuchtung darstellt, die in der Zone vorhanden ist, in welcher sich diese Zelle innerhalb des Netzes befindet, wobei jede Zelle aufweist:

- ein photoempfindliches Element (12) zum Erzeugen eines Signales ($I_{ph}$), das die örtliche Beleuchtung in dieser Zone darstellt; und
- Generatormittel (8, 9) zum Erzeugen des Ausgangssignals ($S_n$), ausgehend von dem die örtliche Beleuchtung der betrachteten Zelle darstellenden Signal und von vorgegebenen Teilen der die örtliche Beleuchtung darstellenden Signalen, welche in zumindest bestimmten Zellen des Netzes benachbart zu der betrachteten Zelle erzeugt wurden,
- wobei die Generatormittel (8, 9) eine vertikale Konduktanz (P8, N1) aufweisen, die von dem Strom ($I_{ph}$) durchflossen wird, welcher dem in dem photoempfindlichen Element (12) fließenden Strom entspricht,

  wobei dieses Netz **dadurch gekennzeichnet ist, dass**
  in jeder Zelle die Generatormittel (8, 9) ferner aufweisen:

- Mittel (8) zum Ermitteln eines mittleren Stroms ($I_{moy}$), der einen räumlichen Mittelwert der Signale ($I_{ph}$) bildet, die die örtliche Beleuchtung der zumindest bestimmten benachbarten Zellen darstellen, und dass
- die Generatormittel (8, 9) ferner mindestens eine laterale Konduktanz (P9) aufweisen, die mit allen lateralen Konduktanzen der Generatormittel (8, 9) aller anderen Zellen in Reihe geschaltet ist, und

  dass

-  der mittlere Strom ($I_{moy}$) an der vertikalen Konduktanz (P8, N1) abgenommen wird.

2.  Netz aus photoempfindlichen Zellen gemäß Anspruch 1, **dadurch gekennzeichnet, dass** die Mittel (8) zum Ermitteln eines mittleren Stromes ($I_{moy}$) so ausgebildet sind, dass sie einen Messstrom ($I_{log}$) gewinnen, der aus einer Sigmakompression des Verhältnisses zwischen dem die örtliche Beleuchtung darstellenden Strom ($I_{ph}$) und dem mittleren Strom ($I_{moy}$) resultiert.

3.  Netz aus photoempfindlichen Zellen gemäß Anspruch 2, **dadurch gekennzeichnet, dass** die Mittel (8) zum Ermitteln eines mittleren Stromes ($I_{moy}$) einen Stromteiler mit einer Konstantstromquelle (1) aufweisen, die in erste und zweite regelbare Konduktanzen (P1, P2, P3, P4) mit einer Sigmawandlerfunktion speisen, wobei die erste (P1, P2) der Konduktanzen durch den in dem photoempfindlichen Element (12) fließenden Strom ($I_{ph}$) geregelt wird, und dass die zweite der Konduktanzen (P3, P4) durch den mittleren Strom ($I_{moy}$) geregelt wird.

4.  Netz aus photoempfindlichen Zellen gemäß Anspruch 3, **dadurch gekennzeichnet, dass** die ersten und zweiten Konduktanzen jeweils einen Transistor (P2, P3) aufweisen, an dessen Steuerelektrode ein Signal, das den in dem photoempfindlichen Element (12) fließenden Strom ($I_{ph}$) darstellt, bzw. ein Signal, das den mittleren Strom ($I_{moy}$) darstellt, angelegt ist.

5.  Netz aus photoempfindlichen Zellen nach Anspruch 4, **dadurch gekennzeichnet, dass** ein Steuertransistor (P1, P4) jedem der einen Teil der Konduktanzen bildenden Transistoren (P2, P3) zugeordnet ist, wobei diese Steuertransistoren (P1, P4) von dem in dem photoempfindlichen Element (12) fließenden Strom ($I_{ph}$) bzw. von dem mittleren Strom ($I_{moy}$) durchflossen werden und ihre Steuerelektroden mit den Steuerelektroden der einen Teil der Konduktanzen (P2, P3) bildenden Transistoren jeweils verbunden sind.

6.  Netz aus photoempfindlichen Zellen nach Anspruch 1, **dadurch gekennzeichnet, dass** die Generatormittel (8, 9) so ausgebildet sind, dass sie einen Messstrom ($I_{out}$) mit der folgenden Gleichung ermitteln:

$$I_{out}(k,l) \cong I_o \cdot \int_{k,l} f_R(k,l) \cdot \frac{I_{ph}(k,l)}{f_R(k,l) * I_{ph}(k,l)} \cong I_o \cdot \int_{k,l} f_R(k,l) \cdot \frac{I_{ph}(k,l)}{I_{moy}(k,l)}$$

worin:

$I_{out}$      Messstrom;
k und l      Indices in X und Y-Richtung einer betreffenden Zelle in dem zweidimensionalen Netz;
$I_o$      Strom, der von einer in jeder betreffenden Zelle vorgesehenen Stromquelle geliefert wird;
$f_R$      Faltungskern aus Gaußscher Form
$I_{ph}$      Strom in dem Photoaufnehmer
$I_{moy}$      mittlerer Strom

7.  Netz aus Zellen gemäß Anspruch 6, **dadurch gekennzeichnet, dass** jede Zelle (k-1, k, k+1) aufweist: eine Konstantstromquelle (2a), eine vertikale Konduktanz (3a), die mit dieser Quelle verbunden ist und von dem Messstrom ($I_{out}$ (k)) durchflossen wird, wobei der Wert der vertikalen Konduktanz proportional zur Auftreffleuchtdichte ist, die von dem photoempfindlichen Element (1a) detektiert wird, wobei der Knoten zwischen der Quelle und der vertikalen Konduktanz mit mindestens zwei lateralen Konduktanzen (4a, 5a) verbunden ist, deren Wert durch den mittleren Strom ($I_{moy}(k)$) moduliert wird.

8.  Netz aus Zellen gemäß Anspruch 7, **dadurch gekennzeichnet, dass** in jeder Zelle die vertikale Konduktanz von mindestens einem ersten Transistor (P2a) schwacher Inversion gebildet wird, dessen Steuerelektrode von mindestens einem zweiten Transistor (P1a) gesteuert wird, der von dem durch das photoempfindliche Element (1a) erzeugten Strom ($I_{ph}(k)$) erzeugt wird, während die lateralen Konduktanzen (4a und 5a) von vierten und fünften Transistoren (P4a, P5a) schwacher Inversion gebildet werden, deren Steuerelektrode durch einen sechsten Transistor (P6a) gesteuert wird, der von dem mittleren Strom ($I_{moy}(k)$) durchflossen wird und dessen Hauptbahnen an entsprechenden homologen Transistoren angeschlossen sind, die in den benachbarten Zellen (k-1, k+1) angeordnet sind.

**9.** Netz aus photoempfindlichen Zellen nach den Ansprüchen 4, 5 und 8, **dadurch gekennzeichnet, dass** die Transistoren MOS-Transistoren aufweisen.

**10.** Netz aus photoempfindlichen Zellen nach den Ansprüchen 4, 5, 8 und 9, **dadurch gekennzeichnet, dass** die Transistoren bipolare Transistoren aufweisen.

**11.** Netz aus photoempfindlichen Zellen nach den Ansprüchen 4, 5 und 8 bis 10, **dadurch gekennzeichnet, dass** die Transistoren MOS-CLBT-Transistoren aufweisen.

**12.** Netz aus photoempfindlichen Zellen nach einem der vorhergehenden Ansprüche, **dadurch gekennzeichnet, dass** es eine allen Zellen ($C_n$, $C_{n-1}$, $C_{n+1}$) gemeinsame Polarisationsschaltung (11) aufweist und dass die vertikalen und lateralen Konduktanzen Transistoren (P8, P9) aufweisen, deren Steuerelektroden durch die gemeinsame Polarisationsschaltung (11) polarisiert sind.

**13.** Netz aus photoempfindlichen Zellen nach einem der Ansprüche 1 bis 12, **dadurch gekennzeichnet, dass** jede Zelle ferner ein adaptives Niederpassfilter (10) aufweist, das einen Teil der Mittel zum Ermitteln des Ausgangssignals ($S_n$) bildet, um das Signal/Rausch-Verhältnis im Bereich schwacher Beleuchtung jeder Zelle zu verbessern.

**14.** Netz aus photoempfindlichen Zellen nach Anspruch 13, **dadurch gekennzeichnet, dass** die Niederpassfilter (10) aller Zellen ein Diffusionsnetz bilden, wobei jedes Filter aufweist: einen vertikalen Zweig (P11, N3), der von dem Messstrom ($I_{log}$, $I_{out}$) durchflossen und von einer Konduktanz gebildet wird, die in Abhängigkeit von dem mittleren Strom ($I_{moy}$) veränderlich ist, und einen lateralen Zweig (P10), der mit den lateralen Zweigen der Filter (10) aller anderen Zellen in Reihe geschaltet ist, und dass das Ausgangssignal ($S_n$) an dem vertikalen Zweig (P11, N3) dieses Filters abgenommen wird.

**15.** Netz aus photoempfindlichen Zellen nach Anspruch 14, **dadurch gekennzeichnet, dass** die lateralen und vertikalen Zweige des Filters (10) jeweils mindestens einen Transistor (P10, P11, N3) aufweisen und dass die Transistoren (P10) der lateralen Zweige durch eine gemeinsame Polarisationsschaltung (11) polarisiert sind, während der eine der Transistoren (P11) des vertikalen Zweiges durch ein Signal gesteuert wird, das von dem mittleren Strom ($I_{moy}$) abhängt.

**16.** Netz aus photoempfindlichen Zellen nach Anspruch 14, **dadurch gekennzeichnet, dass** die lateralen und vertikalen Zweige des Filters (10) jeweils einen Transistor (P10, P11, N3) aufweisen und dass der Transistor des lateralen Zweiges durch den mittleren Strom ($I_{moy}$) gesteuert wird, der in der entsprechenden Zelle gewonnen wird, während die Transistoren aller vertikalen Zweige der Zellen durch eine gemeinsame Polarisationsschaltung (11) polarisiert werden.

**Claims**

**1.** A network of photosensitive cells ($C_n$, $C_{n+1}$, $C_{n-1}$) each cell of which is intended to provide an output signal ($S_n$) representative of the illumination in the zone in which this cell is located within the network, wherein each cell comprises:

- a photosensitive element (12) intended to generate a signal ($I_{ph}$) representative of the local illumination in said zone,
- generation means (8, 9) for generating said output signal ($S_n$) from said signal representative of local illumination of the considered cell and from predetermined parts of signals representative of local illumination and generated in at least some of the network cells next to said considered cell,
- wherein said generation means (8, 9) comprise a vertical conductance (P8, N1) fed by the current (Iph) representative of the current through said photosensitive element (12),

said network being **characterized in that**,
    in each cell, said generation means (8,9) further comprise:

- means (8) for generating an average current ($I_{moy}$) forming a spatial average of the signals ($I_{ph}$) representative of the local illumination of said at least some neighbouring cells,

wherein,

- said generation means (8,9) further comprise at least one lateral conductance (P9) serially connected to all lateral conductances of the generation means (8,9) of all other cells, and

wherein,

- said average current ($I_{moy}$) is taken from said vertical conductance (P8, N1).

2. The network of photosensitive cells according to claim 1, wherein said means (8) for generating an average current ($I_{moy}$) are arranged so as to generate a measurement current ($I_{log}$) resulting from a sigmoidal compression of said ratio between the current ($I_{ph}$) representative of the local illumination and said average current ($I_{moy}$).

3. The network of photosensitive cells according to claim 2, wherein said means (8) for generating an average current ($I_{moy}$) comprise a current divider comprising a constant current source (1) feeding into first and second adjustable conductances (P1, F2; P3, P4) having a sigmoidal transfer function, the first (P1, P2) of said conductances being regulated by the current ($I_{ph}$) through said photosensitive element (12) and the second of said conductances (P3, P4) being regulated by said average current ($I_{moy}$).

4. The network of photosensitive cells according to claim 3, wherein said first and second conductances comprise each one a transistor (P2, P3) to the control electrode of which are applied respectively a signal representative of the current ($I_{ph}$) through said photosensitive element (12) and a signal representative of said average current ($I_{moy}$).

5. The network of photosensitive cells according to claim 4, wherein a control transistor (P1, P4) is associated respectively with each of the transistors (P2, P3) being a part of said conductances, these control transistors (P1, P4) being respectively fed by the current ($I_{ph}$) through said photosensitive element (12) and by said average current ($I_{moy}$) and their control electrodes being connected respectively to the control electrodes of said transistors (P2, P3) being a part of said conductances .

6. Network of photosensitive cells according to claim 1, wherein said generation means (8, 9) are arranged so as to generate a measurement current ($I_{out}$) according to the equation:

$$I_{out}(k,l) \cong I_0 \cdot \int_{k,l} f_R(k,l) \frac{I_{ph}(k,l)}{f_R(k,l) * I_{ph}(k,l)} \cong I_0 \int_{k,l} f_R(k,l) \frac{I_{ph}(k,l)}{I_{moy}(k,l)}$$

in which:

$I_{out}$    measurement current;
k and l    X and Y indices of a relevant cell in the two-dimensional network;
$I_0$    current delivered by a current source provided in each relevant cell;
$f_R$    convolution kernel of Gaussian shape
$I_{ph}$    current in the photoreceiver
$I_{moy}$    average current

7. The network of cells according to claim 6, wherein each cell (k-1, k, k+1) comprises a constant-current source (2a), a vertical conductance (3a) connected to this source and fed by said measurement current ($I_{out}(k)$), the value of said vertical conductance being made proportional to the incident luminance detected by said photosensitive element (1a), the node between said source and said vertical conductance being connected to at least two lateral conductances (4a, 5a) whose value is modulated by said average current ($I_{moy}(k)$).

8. The network of cells according to claim 7, wherein, in each cell, said vertical conductance is formed by at least a first transistor (P2a) in weak inversion and whose control electrode is controlled by at least one second transistor (P1a) fed by the current ($I_{ph}(k)$) generated by said photosensitive element (1a), whilst said lateral conductances (4a and 5a) are formed by fourth and fifth transistors (P4a, P5a) in weak inversion and whose control electrode is controlled by a sixth transistor (P6a) fed by said average current ($I_{moy}(k)$) and whose main paths are joined to the respective homologous transistors located in the neighbouring cells (k-1, k+1).

9. The network of photosensitive cells according to claim 4, 5 or 8, wherein said transistors comprise MOS transistors.

10. The network of photosensitive cells according to claim 4, 5, 8 or 9, wherein said transistors comprise bipolar transistors.

11. The network of photosensitive cells according to claim 4, 5, 8, 9 or 10, wherein said transistors comprise MOS CLBT transistors.

12. The network of photosensitive cells according to any of the previous claims, further comprising a bias circuit (11), common to all the cells ($C_n$, $C_{n-1}$, $C_{n+1}$), and wherein the vertical and lateral conductances comprise transistors (P8, P9) whose control electrodes are biased by said common bias circuit (11).

13. The network of photosensitive cells according to any of the previous claims, wherein each cell further comprises an adaptive low-pass filter (10) being a part of said means for generating said output signal ($S_n$), so as to improve the signal/noise ratio in the region of weak illumination of each cell.

14. The network of photosensitive cells as claimed in claim 13, wherein the low-pass filters (10) of all the cells build a diffusing network, each filter comprising a vertical branch (P11, N3) fed by said measurement current ($I_{log}$, $I_{out}$) and formed by a conductance varying as a function of said average current ($I_{moy}$), and a lateral branch (P10) serially connected to the lateral branches of the filters (10) of all the other cells, and wherein said output signal ($S_n$) is extracted from the vertical branch (P11, N3) of this filter.

15. The network of photosensitive cells according to claim 14, wherein the lateral and vertical branches of said filter (10) each comprise at least one transistor (P10, P11, N3) and wherein the transistors (P10) of the lateral branches are biased by a common bias circuit (11), whilst one of the transistors (P11) of the vertical branch is controlled by a signal which depends on said average current ($I_{moy}$).

16. The network of photosensitive cells according to claim 14, wherein the lateral and vertical branches of said filter (10) each comprise a transistor (P10, P11, N3) and wherein the transistor of the lateral branch is controlled by the average current ($I_{moy}$) established in the corresponding cell, whilst the transistors of all the vertical branches of the cells are biased by a common bias circuit (11).

FIG.:1

FIG.:2

FIG.:4

FIG.:3

FIG.:5

FIG.:7

# FIG.:6

FIG.:8

FIG.:9

FIG.: 10